# EUROPEAN PATENT APPLICATION

(11) **EP 0 878 370 A1**
(43) Date of publication of application: **18.11.1998**
(21) Application number: 98108686.1
(22) Date of filing: 13.05.1998
(51) Int. Cl.: B61D 15/12, B60M 1/28

(54) **Vehicle for executing erection and maintenance works on overhead plants for railway, tramway, subway lines, or similar**

(30) Priority: 16.05.1997 IT SV970026
(71) Applicant: Linea di Contatto S.r.l., 00012 Guidonia (Roma) (IT)
(72) Inventor: Cirpiani, Alfredo, 00012 Guidonia (Roma) (IT)
(74) Representative: Karaghiosoff, Giorgio Alessandro, Dipl.-Phys.

(57) **Abstract**

A vehicle for executing erection and maintenance works on overhead plants for railway, tramway, subway lines, or similar, comprises a trolley (1) running on rails, with at least one liftable or lowerable platform (P) mounted thereon. According to the invention, the said liftable work platform (P) is made to be laterally staggered with respect to the area in which a contact wire (F) of an overhead electrification line may run, and not interfering therewith, the vehicle (1) being provided, on the side opposite the platform (P), with means (P) for balancing the latter.

## Description

The invention relates to a vehicle for executing erection and maintenance works on overhead plants for railway, tramway, subway lines, or similar, comprising a trolley running on rails, with at least one liftable or lowerable platform mounted thereon.

Prior art vehicles of this type have a liftable platform in the central area of the trolley, therefore substantially under the contact wire of the overhead electrification line. The contact wire is generally projectingly held projectingly by a bracket or by other supporting structures, extending over it and, to a predetermined extent, by the side of the track. Since the contact wire is the lowest point of the electrification line, and since it runs within a volume which is substantially aligned vertically above the central axis of the track, the maximum lifting height of the platform is automatically limited by the presence of the contact wire. In order to reach considerably higher portions of the structures suspending the contact wire, for purposes of maintenance or, possibly, assembly thereof, in cases of installation of new electrification lines, extensions have to be mounted on the platform by the side of the contact wire. These extensions are not very stable and often have no sufficiently protective means, to ensure safe operations by the working personnel. Besides the risks deriving from the lack of protections, the performance obtained by personnel who operate in a constantly dangerous condition, is dramatically reduced, since they have to be very careful in their movements.

If operations are to be carried out on the structure portions placed by the side of the track, the extensions are such as to extend laterally and projectingly out of the central liftable work platform, and also upwardly. This case has an additional drawback besides the ones described above, i.e. that such a lateral projecting structure causes the center of gravity of the vehicle to move, which makes the latter very unstable.

The invention has the object to provide a railway vehicle of the type described hereinbefore, in such a way that, by means of a simple and relatively cheap construction, the drawbacks of prior art vehicles may be obviated, ensuring a higher safety and better operating functions for performing maintenance or installation operations on overhead lines.

The invention achieves the above objects by providing a vehicle of the type described hereinbefore, in which the liftable work platform is made to be laterally staggered with respect to the area in which a contact wire of an overhead electrification line may run, and not interfering therewith, the vehicle being provided, on the side opposite the platform, with means for balancing the latter.

The liftable work platform is also movable transversely and laterally out of the central axis of the track, towards the portions of the suspension structure, or similar, which are placed by the side of the track.

According to a preferred embodiment, the platform is vertically liftable upwards to a sufficient extent as to reach the highest portions of the suspension structure, or similar, while being able to oscillate about a horizontal axis parallel to the median axis of the vehicle, and provided at the lower end, whereat the lifting means are connected to the vehicle, the platform being supported so as to oscillate at the upper end of the lifting means, about an axis parallel to the longitudinal median axis of the vehicle.

Advantageously, between the platform and the lifting means, there are provided means for locking the platform in the oscillated position, horizontal thereto, when said means are angularly outwardly inclined.

Together with the work platform, the vehicle may also comprise an additional central platform, whose width substantially corresponds to the area traditionally covered by the contact wire, said platform being also liftable and lowerable.

This central platform may be used for any purpose, and preferably has the function of a liftable work bench, both with a tool- and a piece-holder.

According to an improvement, several assemblies for contributing to installation or maintenance operations may be removably attached to the central platform, either alternatively or combinedly.

A first assembly consists of a unit for guiding and slidably supporting the suspension cables or contact wires, which are dismantled from the existing line or mounted on the suspensions for erecting a new line or for replacing an old suspension cable or an old contact wire.

This assembly has at least one guiding and supporting pulley, which is rotatable about an axis perpendicular to the longitudinal axis of the cable or wire, particularly two spaced pulleys.

The guide pulleys may be also made to be movable and therefore adjustable as regards their position transverse to the longitudinal axis of the cable or wire.

Alternatively or combinedly, there is provided an other assembly for releasing and temporarily supporting the conductors, comprising a cradle for bearing the suspension cable, which may be lifted together with the work bench and moved transverse to the contact wire.

Said auxiliary assemblies and the liftable work bench are provided with standard connections.

One preferred embodiment of the vehicle according to the invention provides that the counterweight for balancing a first liftable work platform consists of a second additional platform, substantially like the former, and itself laterally staggered with respect to the area traditionally covered by the contact wire, and symmetrical with respect to the longitudinal median axis of the vehicle, on the opposite side thereof.

The lifting means, the means for oscillating them, and the means for locking the platform in the oscillated position with respect thereto, may be of any type.

Preferably, the lifting means consist of oil hydraulic or pneumatic actuators, or similar, of the telescopic type, and particularly of pairs of said actuators for each work platform, the actuators of each pair being aligned on an axis parallel to the longitudinal median axis of the vehicle and articulated at their lower end to the vehicle so as to oscillate about the same axis parallel to the longitudinal median axis of the vehicle.

The work platforms are articulated at their two end sides to the upper ends of the two telescopic actuators, so as to oscillate about an axis parallel to the longitudinal axis of the vehicle.

The means for laterally outwardly oscillating the pairs of telescopic actuators also advantageously consist of oil hydraulic, or pneumatic actuators, or similar, and are interposed between the pairs of lifting telescopic actuators and a portion of the stationary structure of the vehicle, while being oriented transverse thereto.

The means for locking the work platform in the oscillated position, horizontal with respect to the lifting actuators in the inclined position, advantageously consist of a hydraulic, pneumatic or oil hydraulic circuit, or similar, of the closed type, which comprises a tank and a double-acting cylinder, there being provided an automatic or manual on-off valve, to close the recirculation circuit between the inlets and outlets of the double-acting cylinder.

The vehicle according to the present invention may be either motor-driven, i.e. provided with a dedicated cab, and with means of propulsion, or of the type arranged to be towed or pushed by a separate engine.

The advantages of the present invention are readily apparent from the above disclosure.

The arrangement of the liftable work platform/s allows to reach such heights that the working personnel may work in the most convenient and safe conditions, even on the highest portions of the suspension structure.

The possibility to incline the lifting means and, at the same time, to restore this inclination by a complementary oscillation of the platform makes it possible to work in the most convenient and safe conditions, even on the highest portions of the structure, disposed sideways with respect to the track.

The counterweight and particularly the provision, as a counterweight, of the second lateral work platform improves the versatility and convenience of the vehicle and, besides allowing to reach portions of the suspension structure on the track side opposite to that of the first platform, makes it also possible to work with a greater number of people at the same time.

The means for handling and moving the work platforms are simple, safe and relatively cheap, being readily available on the market.

The provision of a third additional central platform, particularly usable as a liftable work bench or as a bench for supporting auxiliary interchangeable and modular assemblies, provides an increased work convenience and ensures a better execution of the installation operations, an increased working speed and a higher safety for workers.

The remarkable flexibility of the vehicle allows it to be used in any work condition, for example in tunnels, in subway lines, in narrow-gauge lines, etc.

Further improvements of the invention will form the subject of the dependent claims.

The characteristics of the invention and the advantages deriving therefrom will appear more clearly from the following description of an embodiment, illustrated, by way of example and not restriction, in the annexed drawings, in which:
Fig. 1 is a frontal view of the vehicle according to the invention on a schematic railway line having a generic suspension structure for overhead electrification lines.

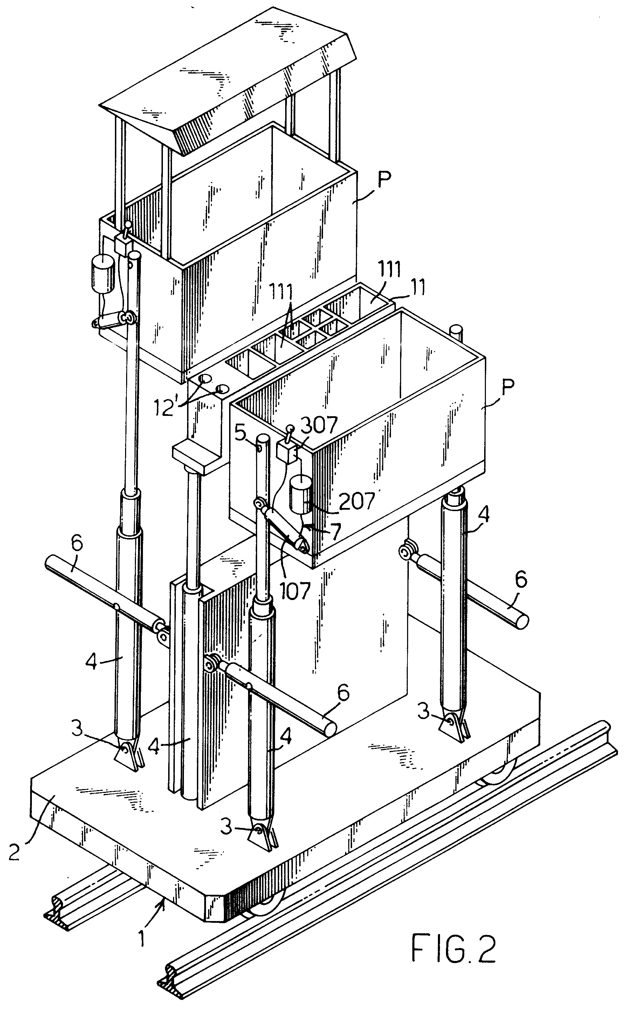

Fig. 2 is a perspective view of the vehicle according to the invention.
Fig. 3 shows a magnified detail of an assembly for uncoiling and installing or for dismantling and recovering especially contact wires or other conductors.
Fig. 4 shows another assembly for releasing and temporarily displacing, particularly the contact wire and/or the suspension cable from a suspension.

Referring to the figures, a railway vehicle, in the example a railway trolley 1 without specific propulsion and drive means, comprises a plane surface 2, with two pairs of oil hydraulically driven telescopic lifting actuators 4 being hinged on the two sides of the longitudinal median axis of the trolley 1, and symmetrically with respect to it. The lifting actuators 4 are aligned on an axis parallel to the longitudinal axis of the trolley 1 and are articulated to the plane surface 2 so as to oscillate in the two directions with respect to a perfectly vertical orientation, about two axes 3 parallel to the longitudinal axis of the vehicle 1. Each pair of telescopic lifting actuators 4 has, at its upper end, means for articulating a platform having the form of a basket. The work platform P is interposed between the ends of each pair of actuators 4 and is articulated thereto so as to oscillate about an axis 5 parallel to the hinging axis of the lifting actuators 4. Between a stationary part of the framework of the trolley 1 and the bottom element of each lifting actuator 4, there is provided an actuating cylinder 6, being oriented transverse to the longitudinal axis of the trolley and radially with respect to the oscillation axis of the lifting actuators, and controlling the inclination movement of the lifting actuators 4.

Between each liftable work platform P and the lifting actuators associated thereto, particularly on an upper terminal for attachment thereto, there is provided an additional double acting cylinder 107 which is part of a closed recirculation circuit 7, connecting the inlet and the outlet of the double acting cylinder 107. In the closed recirculation circuit 7, there may be provided a tank 207, whereas the free movement of the piston rod 107 is stopped by a manual and/or automatic on-off valve, whereby, through the interception of the circulation fluid, the free oscillation of the platform P is stopped.

The disposition of the two platforms P on the opposite sides of the longitudinal median axis of the vehicle 1 is such that, the work platforms P are laterally outwardly staggered with respect to a central volume, within which a contact wire of an overhead electrification line may traditionally be arranged to pass.

As is apparent from the figures, thanks to this expedient, the platforms P may be lifted higher than the contact wire, so as to be able to conveniently and safely operate on the highest portions of the suspension structure or of the plant, whereas, in order to operate on the portions disposed outwardly with respect to the contact wire, the corresponding platform is carried closer thereto, by inclining the pair of lifting actuators 4.

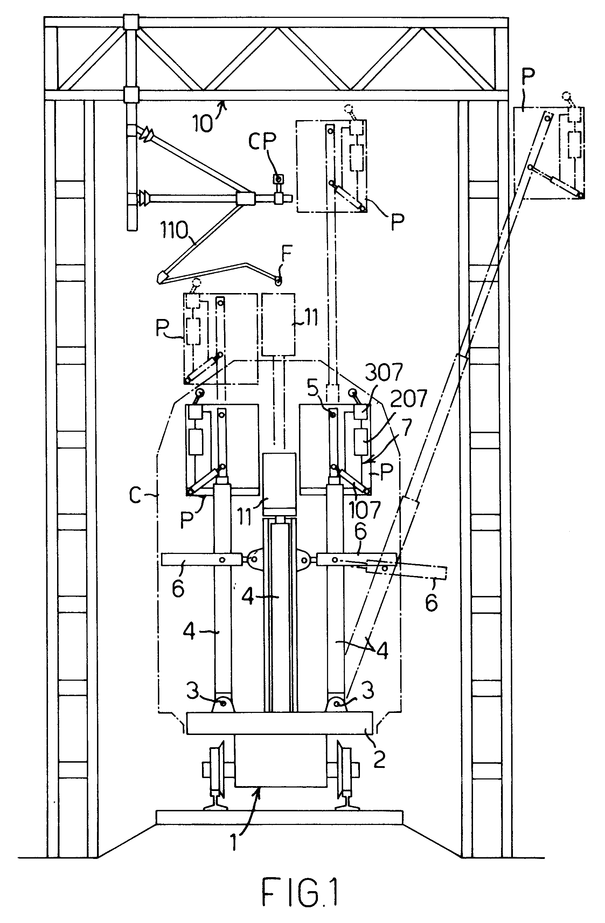

The disposition of the work platforms P is such that, when the lifting actuators 4 are in the vertical position, they are directly sideways with respect to the area traditionally covered by the contact wire, therefore allowing to easily operate thereon and/or on the suspension cable. In the completely lowered position, the platforms do not exceed the dimensions provided for a railway vehicle, as indicated by the dashed and dotted line of fig. 1 and indicated as C. The lifting position may be limited as desired, according to the operating conditions, such as in railway lines, in subway lines, in narrow-gauge lines, etc. The limitation of the lifting stroke may be provided in several ways, for example by providing end-of-stroke controls which stop the lifting actuators 4. A method ensuring the highest safety consists in providing lifting actuators which always reach their maximum extension of length, while terminal uprights for supporting the platforms P, having a variable length according to the lines in which the vehicle is used, may be attached thereto. By this arrangement, no dangerous conditions, due to the dimensional shape (C) being exceeded in the rest condition, may occur.

The platform may be of any type and may be equipped with several accessories, such as a railing, a roof, and others.

According to a further very advantageous characteristic, the vehicle has an additional intermediate platform 11, charged with several functions. Particularly, as indicated in the figures, this intermediate, central platform 11 is a work bench, a tool-holder and/or a piece-holder which may be lifted or lowered as desired, up to the same level as the contact wire F.

The liftable work bench 11 allows to lay pieces and tools, and to easily supply the working personnel with tools and pieces. To this end, the liftable work bench also has lifting actuators 4, like those of the work platforms P and is equipped particularly with piece- or tool-holding trays, containers, boxes, housings, drawers, or similar. The figures show piece-or tool-holding trays 111. The work bench 11 may also hold outlets for power supply, compressed air, or similar, and several tools, like vices, and others, may be fixed thereon.

According to a further improvement of the invention, auxiliary assemblies for executing specific operations may be removably and/or interchangeably, and separately or combinedly fixed to the work bench.

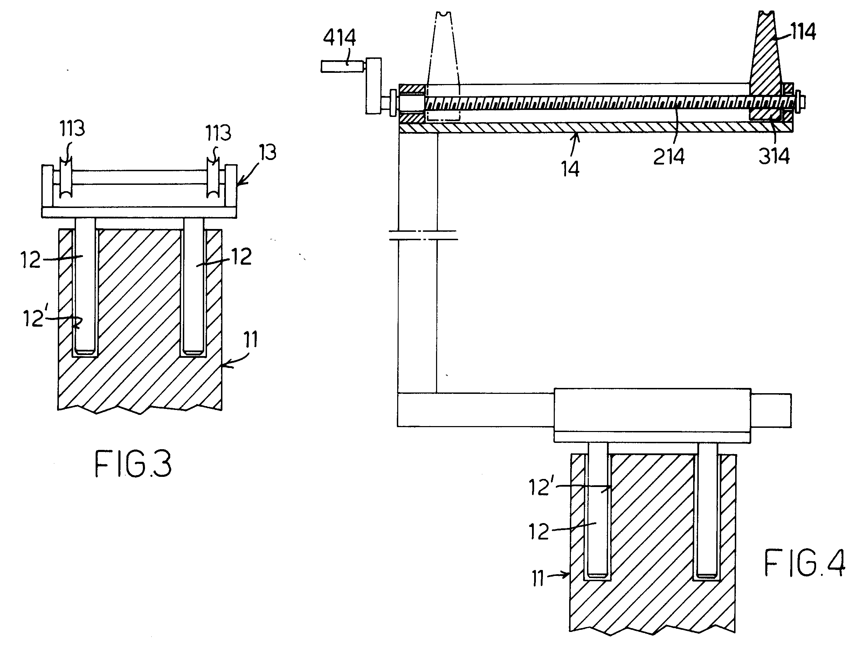

Said assemblies and the bench have standard connections 12, 12', and two schematic examples thereof are illustrated in figures 3 and 4.

Figure 3 shows an auxiliary wire-guiding assembly, which may be used for dismantling a contact wire F and for installing it. On one end of the liftable work bench 11, there are provided two holes 12' for coupling to a support fork 12, which bears two pulleys freely rotating about an axis transverse to the contact wire F. Said assembly, globally indicated as 13 may be lifted up to the level of the predetermined path of the contact wire. When the contact wire F is to be dismantled from the line, it is progressively released from the support arms, and is passed on one of the two pulleys 113, an thus advanced to a winding coil, mounted on bearing means, arranged at the same level as the plane surface 2 of the vehicle, or of another vehicle designed to the purpose. In this way, the contact wire to be replaced is simply released and laid on the guide pulley 113, whereas the vehicle progressively advances along the predetermined line length, and whereas the contact wire is progressively wound on the coil. However, when a new contact wire is to be installed, said wire, unwound from a full coil arranged like the coil for winding the dismantled contact wire, is passed on one of the two pulleys 113 and then lifted up to the support arms. Therefore, the vehicle may advance along the railway line, whereas the contact wire to be installed is progressively unwound from the coil, stretched along the line, and held, thanks to the pulley 113, substantially at the same level as the support arms, the whole in a rapid, fast and substantially continuous way, with no need for complex means for lifting the unwound wire at the installation level.

The guide pulleys 113 may be also supported so as to be adjustable in relation to their position, transverse to the contact wire.

Referring to figure 4, the assembly 14 consists of a cradle for temporarily supporting the contact wire and/or the suspension cable (cp) and for temporarily moving it. A cradle 114 is mounted on a saddle, being slidable transverse to the uncoiled contact wire F. The means for moving the saddle may be of any type, and figure 4 shows them as hand operated 414 worm and nut screws 214, 314, only by way of illustration. Thanks to the liftable work bench and to the possible translation of the cradle 114, the latter may be brought to engage and support the contact wire F and/or the suspension cable cp, which may be temporarily released from the support arms 110 of the suspension and temporarily displaced from them to a sufficient extent as to enable the maintenance and replacement operations to be executed. When these operations are over, the contact wire may be brought again to the clamps of the arms and attached thereto. Besides said assemblies, specifically indicated, other types of assemblies for executing other specific operations may be applied to the liftable work bench 11.

From the above disclosure, the remarkable functionality and flexibility of the vehicle according to the invention are apparent, as well as its simplicity in construction, cost effectiveness and safety. Moreover, the vehicle according to the invention allows for simpler, faster and more efficient interventions on lines.

The invention is not intended to be limited to the embodiments described and illustrated herein, but may be greatly varied, especially as regards construction, without departure from the guiding principle disclosed above and claimed below.

## Claims

1. A vehicle for executing erection and maintenance works on overhead plants for railway, tramway, subway lines, or similar, comprising a trolley (1) running on rails, with at least one liftable or lowerable platform (P) mounted thereon, characterized in that the liftable work platform (P) is made to be laterally staggered with respect to the area in which a contact wire (F) of an overhead electrification line may run, and not interfering therewith, the vehicle (1) being provided, on the side opposite the platform (P), with means (P) for balancing the latter.

2. A vehicle as claimed in claim 1, characterized in that the liftable work platform (P) is also movable (6) transversely and laterally out of the central axis of the track, towards the portions of the suspension structure (10), or similar, which are placed by the side of the track.

3. A vehicle as claimed in claims 1 or 2, characterized in that the platform (P) is vertically liftable (4) upwards to a sufficient extent as to reach the highest portions of the suspension structure (10), or similar, while being able to oscillate about a horizontal axis (3) parallel to the median axis of the vehicle, and provided at the lower end, whereat the lifting means (4) are connected to the vehicle (1, 2), the platform (P) being supported so as to oscillate at the upper end of the lifting means, about an axis (5) parallel to the longitudinal median axis of the vehicle (1).

4. A vehicle as claimed in one or more of the preceding claims, characterized in that between the platform (P) and the lifting means (4), there are provided means (7, 107, 207, 307) for locking the platform (P) in the oscillated position, horizontal thereto, when said means are angularly outwardly inclined.

5. A vehicle as claimed in one or more of the preceding claims, characterized in that, together with the work platform (P), the vehicle may also comprise an additional central platform (11), whose width substantially corresponds to the area traditionally covered by the contact wire (F), said platform being also liftable, at least up to under the contact wire (F) and lowerable.

6. A vehicle as claimed in claim 5, characterized in that the central platform (11) is a liftable work bench, equipped with accessories and/or tool- and/or piece-holders and/or with outlets for power supply and/or with tools fixedly or removably mounted thereon.

7. A vehicle as claimed in claims 5 or 6, characterized in that several assemblies (13, 14) for contributing to installation or maintenance operations may be removably attached to the central work platform (11), either alternatively or combinedly.

8. A vehicle as claimed in claim 7, characterized in that, in combination with the liftable work bench (11), there is provided an assembly comprising means (113) for guiding and slidably supporting suspension cables (CP) or contact wires (F), which are dismantled from the existing line or mounted on the suspensions (S) for erecting a new line or for replacing an old suspension cable (CP) or an old contact wire (F).

9. A vehicle as claimed in claim 8, characterized in that the assembly (13) has at least one guiding and supporting pulley (113), which is rotatable about an axis transverse, particularly perpendicular to the longitudinal axis of the cable or wire, particularly two spaced pulleys (113), which may be fixed or transversely translatable.

10. A vehicle as claimed in one or more of the preceding claims 6 to 9, characterized in that, alternatively or combinedly, there is provided an other assembly (14) for releasing and temporarily supporting the contact wire (F) and/or the suspension cable (CP), or similar, in their position displaced from the support arms, comprising a cradle (114) for bearing the wire (F) and/or the suspension cable (CP), which may be lifted together with the work bench or separately therefrom, and moved (214, 314, 414) transverse to the contact wire (F).

11. A vehicle as claimed in one or more of the preceding claims 6 to 10, characterized in that said auxiliary assemblies (13, 14) and the liftable work bench (11) are provided with standard connections (12, 12').

12. A vehicle as claimed in one or more of the preceding claims, characterized in that at the counterweight for balancing a first liftable work platform (P) consists, at least partially, of a second additional platform (P), substantially like the former, and itself laterally staggered with respect to the area traditionally covered by the contact wire (F), and symmetrical with respect to the longitudinal median axis of the vehicle (1), on the opposite side thereof.

13. A vehicle as claimed in one or more of the preceding claims, characterized in that the means (4) for lifting the platform/s (P), respectively consist of oil hydraulic or pneumatic actuators, or similar, of the telescopic type, and particularly of pairs of said actuators (4) for each work platform (P), the actuators of each pair being aligned on an axis parallel to the longitudinal median axis of the vehicle and articulated at their lower end to the vehicle (1, 2) so as to oscillate about the same axis (3) parallel to the longitudinal median axis of the vehicle (1).

14. A vehicle as claimed in one or more of the preceding claims, characterized in that the work platform/s (P) are articulated (5) at their two end sides to the upper ends of the two telescopic actuators (4), so as to oscillate about an axis parallel to the longitudinal axis of the vehicle.

15. A vehicle as claimed in one or more of the preceding claims, characterized in that the means for laterally outwardly oscillating the pairs of telescopic actuators (4) also advantageously consist of oil hydraulic, or pneumatic actuators, or similar, and are interposed between the pairs of lifting telescopic actuators (4) and a portion of the stationary structure of the vehicle (1), while being oriented transverse thereto.

16. A vehicle as claimed in one or more of the preceding claims, characterized in that the means for locking the work platform/s in the oscillated position, horizontal with respect to the lifting actuators (4) in the outwardly laterally inclined position, advantageously consist of a hydraulic (7), pneumatic or oil hydraulic circuit, or similar, of the closed type, which comprises a tank (207) and a double-acting cylinder (107), there being provided an automatic or manual on-off valve (307), to close the recirculation circuit (7) between the inlets and outlets of the double-acting cylinder (107).

17. A vehicle as claimed in one or more of the preceding claims, characterized in that it may be either motor-driven, i.e. provided with a dedicated cab, and with means of propulsion, or of the type arranged to be towed or pushed by a separate engine.
